# EUROPEAN PATENT APPLICATION

(11) **EP 3 926 422 A1**
(43) Date of publication of application: **22.12.2021**
(21) Application number: 20180536.3
(22) Date of filing: 17.06.2020
(51) Int. Cl.: G05B 19/042, G05B 19/045, G05B 19/05

(54) **METHOD FOR PROGRAMMING AT LEAST ONE MACHINE IN AN INDUSTRIAL AUTOMATION SYSTEM**

(71) Applicant: Siemens Aktiengesellschaft, 80333 München (DE)
(72) Inventor: Geipel, Markus Michael, 80799 München (DE); Montrone, Francesco, 85521 Riemerling (DE)

(57) **Abstract**

The present invention relates to a computerimplemented method for programming at least one machine in an industrial automation system, the industrial automation system comprising the at least one machine and at least one additional machine, the method comprising the steps of:
- defining a task tree program for the at least one machine based on a behavior tree structure, wherein the behavior tree structure is composed of at least one composition of task, wherein the at least one composition is a sequence composition of tasks or a fallback composition of tasks,
- defining a simulation requirement for at least one of the tasks or the composition of tasks,
- providing the task tree program to a PLC for execution of the task tree program by the PLC, whereby the simulation requirement triggers a simulation of the at least one of the tasks or the composition of tasks by a computerimplemented simulation program during execution of the task tree program.

## Description

The present invention relates to a computerimplemented method for programming at least one machine in an industrial automation system and a display editor configured to perform this method.

In the industrial automation context autonomous machines gain more and more of importance. There are continuous efforts made in the manufacturing industry to efficiently implement a lot size one production based on factories equipped with modular and autonomous machines acting on the shop floor. At the same time, modular and in particular autonomous machines are hard to program and coordinate.

In the case of structured text, programming languages of the IEC 61136 standard follow the imperative programming paradigm. They define the behavior of a concrete machine as a rigid sequence with explicit decision points. In the case of function block diagrams, a logical circuit is emulated. This is a good fit for the classical factory where precisely defined repetitive movements are desired, reactions depend on simple, often binary sensor input and the machine has a limited number of states, like for example running, idle, off, etc.

This programming paradigm is however ill-suited to program dynamic, autonomous or situation dependent behavior. In modern factories, flexibility and resilience become more important than ever. As an exemplary example, workpieces, that are to be machined in an automation line, are not always exactly located. Errors in object detection by neural networks might happen from time to time and should not stall the production. Moreover, humans working in collaboration with robots add a certain randomness and variance. So-called autonomous guided vehicles, short AGV, do not always arrive at the exact planned time at the exact planned position.

It has been proposed to use state machines or hierarchical state machines. They have the drawbacks to be hard to reuse or modularize. A state Machine is an acyclic graph and modularizing it would mean to perform a graph cut which can be nontrivial.

It is one object of this disclosure to provide a method and an editor that facilitate an easy understandable and efficient programming of autonomous machines in an industrial automation environment.

These objects are addressed by the subject matter of the independent claims. Advantageous embodiments are proposed in the dependent claims.

According to a first aspect, a computerimplemented method for programming at least one machine in an industrial automation system is proposed, the industrial automation system comprising the at least one machine and additional machines, the method comprising the steps of defining a task tree program for the at least one machine based on a behavior tree structure, wherein the behavior tree structure is composed of at least one composition of tasks, wherein the at least one composition is a sequence composition of tasks or a fallback composition of tasks, defining a simulation requirement for at least one of the tasks, and providing the task tree program to a PLC for execution of the task tree program by the PLC, whereby the simulation requirement triggers a simulation of the at least one of the tasks by a computerimplemented simulation program during execution of the task tree program.

The industrial automation system comprises machines, for example robots, actuators, AGV's, production machines, handling machines etc. The industrial automation system is for example part of a factory, a production plant or a process automation plant. The industrial automation system can by way of example have central instances on the management level planning level were supervisory level like so-called ERP, short for enterprise resource planning, MES, short for manufacturing execution system, etc. The industrial automation system may comprise autonomous machines at least partly. In embodiments, the industrial automation system or a whole factory comprising the industrial automation system is built up by autonomous machines, so that central instances might only serve as fallback equipment or only be used for specific purposes like e.g. monitoring.

The step of defining a task tree program based on a behavior tree structure can be performed by a user, for example a production planning engineer, entirely or partly. Advantageously the step of defining by a user is assisted by a computerimplemented method using artificial intelligence by proposing commonly used behavior trees or by proposing extensions to basic behavior models that can be selected by the user. The mechanism of behavior trees can advantageously be used for defining all kind of different behavior patterns and - in contrast to state machines mechanisms - for handling them flexible or dependent from an application the machine is used in or adaptable over time. It also enables alternative production solutions, which can easily be described by a product bill of processes, BOP, instead of an explicit and imperative automation programming. This is especially of interest in cases where new product variance or the new workload of machines require re-planning.

The composition of tasks is chosen by the user or proposed by an AI based assistant method according to the type of job to be performed by the machine. The composition of the task characterizes the task in terms of its logic. For behavior trees, sequence compositions or fallback compositions are used.

Sequence composition tasks comprise ordered or partially ordered set of tasks which are executed in this order of inter-dependency. The return status is success if all tasks themselves succeeded and failure otherwise. The logic can be described as an AND-connected set of tasks. Sequence composition can advantageously be chosen in cases, where the simulation of the task is to be performed for the whole task set prior to an execution of the whole task set.

Fallback composition tasks comprise an ordered or partially ordered set of tasks which are executed in this predefined order. Upon the first successful task the execution returns success. The fallback composition only returns failure if all tasks failed. The predefined order may represent the prioritization for example according to expected costs of the tasks. Fallback composition can advantageously be chosen in scenarios, where the result of the simulation of one or more of the tasks or the whole task set shall be used for influencing the order of the tasks within a fallback sequence for a subsequent execution.

The individual tasks within a set of tasks can also be seen as subtasks.

The task tree program is provided to a PLC. The PLC can be the PLC of the machine or a PLC outside the machine and connected to the machine, so that the PLC causes the machine to perform the steps according to the task tree program when executed.

The step of defining a simulation requirement is for example performed together with the definition of the task tree program. The simulation requirement is set for at least one task and for example for any part of the behavior tree. For example, a whole set of tasks building a sequence composition task or a fallback composition task is defined as having a simulation requirement before execution. It is also possible to only define the simulation requirement for a specific part within the tree or only specific subtasks in a set of tasks.

Similar to the execution, also the simulation propagates through the behavior tree. Advantageously, the same rules for status codes are used. Before a task, for which the simulation requirement has been designed, is executed, it is simulated. The simulation will return failure or success. A simulation may range from complex 3D simulations of multibody systems to simple computerimplemented checks of constraints, like for example the length of a workpiece not being too large for specific machine.

The simulation of a task with simulation requirement prior to the execution of this task is to be understood as part of the execution of the overall task tree program. In other words, the simulation is performed during the execution of the task tree program and prior to the execution of the specific task to be simulated.

Behavior trees are commonly used in the game domain. There subtrees that are canceled due to execution failure do not matter. Games are virtual and the goal is only to appear intelligent and goal driven, not to actually be efficient. In an industrial automation abortive attempts of execution cost time and material and are to be avoided. The simulation of the task or of several tasks or of a set of tasks or of a sub-tree within the behavior tree model or of the whole behavior tree enhances the behavior tree based programming of machines in the industrial automation context. Advantageously, trial and error is avoided due to coupling the execution to the simulation in the proposed manner.

The flexible definition of simulation requirements for one or more tasks enables balancing the aspects of computing power for the tasks to be simulated before execution and potential delay due to the computations on the one hand and the aspects of reduction of rejects or fault conditions on the other hand. The weighting of how many tasks to simulate can be done by the engineering expert or can be assisted by artificial intelligence-based methods being based on models which have been proven successful.

The option of defining a simulation requirement for trees or subtrees or corresponding tasks or subtasks, allows to use tasks in the task tree program, for which the success, e.g. the availability of resources, is unknown or unsure. Therefore, also in unknown or partially unknown industrial automation systems, consisting of unknown or partly unknown machines, the method can be used. There is no need for a time and computing power consuming overall test or simulation, e.g. for commissioning, to explore weaknesses or incompatibilities in the production process in advance. The simulation is triggered by the simulation requirement where needed only and only in case, where the production process arrives at a specific status. In particular for a task with simulation requirement, the simulation is performed mandatory, so that the risk of arriving in a failure status or producing reject or even causing a dangerous situation in terms of safety on the shopfloor is minimized. This prevents from unnecessary testing or simulation in advance and guarantees generation of efficient or safe programs for one or more partly or fully autonomous machines within an industrial automation system.

A simulation requirement is tied to the implementation of the task or to the design of the task, e.g. in the engineering phase. A task might comprise an interface for initiating the execution as well as an interface for initiating the simulation.

The simulation might for example be performed on the PLC, where also the execution of the task tree program will be performed later on. The processor of a machines PLC can perform the simulation as well as the execution of the task tree program. Moreover, in possible variants, the simulation might be performed outside the machine, and especially on another processor, e.g. on a processor of a simulation computing unit. This is especially advantageous in cases with complex simulation programs requiring a high computing power.

According to an embodiment of the invention, the at least one of the tasks or the composition of tasks comprises a decorator for including constraints to the at least one of the tasks. Those constraints are for example a specified number of retry attempts, the reservation of limited resources or time limits. The use of decorators enables using a behavior tree model with multi-usable trees or subtrees, which are individualized by adding the decorators.

According to an embodiment of the invention, the at least one of the tasks or the composition of tasks comprises one or more subtasks, wherein the subtasks are a sequence composition of subtasks or a fallback composition of subtasks. The task tree program can be seen as composed of tasks and/or composition of tasks that build behavior trees and can be composed of subtasks, which build subtrees.

According to an embodiment of the invention, the at least one of the tasks or the composition of tasks build subtasks to a superordinate task. The structure of behavior trees can easily be extended in both ways up and down the tree or changed, in particular using modularized tree elements.

According to an embodiment of the invention, at least one of the tasks is a delegate task, defining another machine of the additional machines of the industrial automation system as responsible for executing a predefined task. Advantageously, a delegate task is part of a fallback composition task, so that a failure result of the subtasks causes execution of the delegate part and delivers a success result of the overall task. The delegate task defines a required task depending on the other tasks and their results in the fallback composition and requires no implementation itself. The machine publishes the delegate task in order to find another machine which can perform this task on its behalf before the delegation task is executed or simulated on the machine. Using a delegate task enhances the idea of distributed machines in a factory acting autonomously up to a certain degree. With this mechanism of delegation tasks, the implementation, simulation and execution of a behavior tree can be distributed over an arbitrary number of machines.

According to an embodiment of the invention, a sequence of execution of tasks in the PLC within a composition of tasks is changed dependent on the output of the simulation. The sequence of execution within the composition is for example changed automatically in the task tree program after simulation and before execution. Several tasks or subtasks, which are to be simulated and compared against one another, can for example be implemented as parallel sequence composition, so that the simulation task is performed for all different tasks and afterwords a ranking can be created which reflects the results of the different simulations with respect to a certain value, for example the successful performance of the task or a production time.

According to an embodiment of the invention, the task tree program is provided to the PLC for execution of an automation task. In an embodiment where the proposed method is performed on several machines, each respective generated task tree program is advantageously provided to the respective PLC of the respective machine. The automation tasks of the different machines might cooperate to build an overall automation task. The overall automation task might also comprise actions that have to be performed by a human operator. The randomness brought in by humans working in collaboration with the machines leads to unpredictable states. The different behavior models of the machines can react to those unpredictable states in a flexible manner without the need to program predefined procedures. In particular, communication between machines is implemented via common industrial communication mechanisms and a shared memory, especially a blackboard pattern. Communication standards like Industrial
Ethernet, Profinet etc. can be used as well as protocols like MQTT or REST for exchanging data, in particular tasks or status or simulation results, between machines in the industrial automation system.

According to an embodiment of the invention, the task tree program is defined graphically or in a domain specific language. Correspondingly, a graphical or text-based editor for behavior trees can be used, which allows a top-down approach following a divide and conquer strategy to design the behavior of the industrial automation system. This means the system can for example be hierarchically deconstructed into subtrees. On the last level subtrees are composed of tasks. The simulation of one or more selected tasks or for example whole subtrees allows to use tasks or subtasks within the behavior tree, for which a success is unknown or cannot be guaranteed. The uncertainty of implementing the designed task tree program in for example an unknown or partially unknown industrial automation system, consisting of unknown or partly unknown machines that have to cooperate to successfully perform the automation task in the concrete industrial automation system, can be addressed advantageously by assigning those uncertain tasks a simulation requirement.

In embodiments, data models that are used for logical description of the tasks can be based on OPC UA or WinCC or DDS. Furthermore, formats like XML or JSON may be used for enabling a compatible exchange of information between different machines of different suppliers, e.g. originating from the IoT realm that might not be tailored to industrial usage.

According to an embodiment of the invention, the task tree program is defined based on reusable behavior tree modules. The subtrees can be reused easily, since their descriptions are not state-dependent. In an advantageous way, a modularized programming is enhanced.

According to another aspect, a computer program product is provided comprising instructions which, when executed by a computer, cause a computer to carry out the method according to one of the embodiments described above. The computer might be a processor connectable to a human machine interface. The computer program product may be embodied as a function, as a routine, as a program code or as an executable object, in particular stored on a storage device.

According to another aspect, a display editor configured to perform a method for programming at least one machine in an industrial automation system according to one of the embodiments described above is provided. The display editor may be implemented in hardware and/or in software. If implemented in hardware, it may be embodied as a human machine interface, HMI, or a device, e.g. as a computer or as a processor or as a part of a system, e.g. a computer system. If implemented in software, it may be embodied as the computer program products described above.

According to an embodiment of the invention, the PLC further comprises a transpiler and a compiler for generating machine code from the task tree program to be executed by the PLC or an interpreter for execution of the task tree program. The task tree program can for example be transpiled into an IEC 61131 language and then compiled to PLC machine code. Alternatively, the task tree program can be loaded onto the PLC and can be executed with an interpreter running on the PLC. The transpiler or interpreter might be combined with the display editor described above as a computer program product. This combination might be used as an extension of an existing programming environment.

Especially for dynamic environments the new coordination mechanism based on behavior trees comprising the simulation is more efficient in terms of programming effort, more accessible and interpretable for normal experts and consequently less error-prone as well as more flexible in terms of usability in changing industrial automation system environments.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

In the following different aspects of the present invention are described in more detail with reference to the accompanying drawings.
- Figure 1: A schematic representation of machines in an industrial automation system, the machines being programmed according to a first embodiment of the invention;
- Figure 2: a schematic representation of a task tree program according to a second embodiment of the invention;
- Figure 3: a schematic representation of the method of programming machine according to a third embodiment of the invention;
- Figure 4: a schematic representation of the method of programming machine according to a fourth embodiment of the invention.

In the Figures, like reference numerals designate like or functionally equivalent elements, unless otherwise indicated.

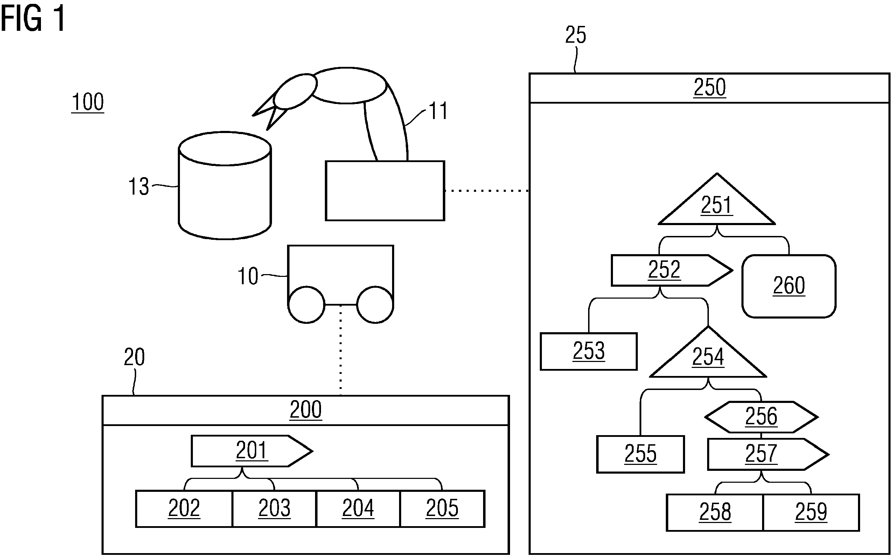

The first embodiment refers to an industrial automation system 100 with - among others - two machines, an AGV 10 and a robot 11, which are installed to fulfill an automation task in cooperation with each other. Figure 1 schematically shows the two machines, the AGV 10 and the robot 11. In addition, a container 13 is shown. The robot 11 might be a gripper. The gripper 11 is for example permanently and fixed installed to grip parts from the container 13 and place them for example onto a conveyor. The gripper 11 for example performs an automation task "get part" 250, which is composed of a fallback composition 251, which again is composed of a sequence composition 252. When executing the sequence composition 252, first a task "parts left in container?" 253 is performed. In case this task delivers a success, the next group of tasks within the sequence composition 252 is performed, which is a fallback composition 254. For the fallback composition 254, first the task "grasp part" 255 is performed. In case the task "grasp part" 255 results in a success, the fallback composition 254 is fulfilled and also the sequence composition 252 then relievers success. The part then has been grasped successfully and the task "get part" 250 overall is a success.

In case the task "grasp part" 255 cannot be performed successfully, the fallback composition 254 comprises a sequence composition 257, which again comprising the tasks "rattle container" 258 and "grasp part" 259. Again, due to the nature of the sequence composition, both tasks have to be successfully performed to deliver a success of the sequence composition 257. There is a decorator "retry 2x" 256 added to the sequence task 257, that leads to a retry of two times in case of failure of the sequence task 257 and only delivers a failure as a result to the fallback composition 254 after the third unsuccessful task performance. In case, that the sequence composition 257, eventually with the usage of the decorator 256, delivers a success, the overall fallback composition 254 delivers a success and the task "get part" 251 has successfully been performed by the gripper 11. In case the sequence composition 257, also considering the decorator 256, does not result in a success, the overall sequence composition 252 delivers a failure, so that within the fallback composition 251 next the task "delegate move part to robot" 260 is performed.

This task "delegate move part to robot" 260 is embodied as a delegate task, which means that this task is to be performed by another machine than the gripper 11. Details about the delegation, for example which machines to delegate the task to, might be programmed within the task tree program "get part" 251 or might be generally defined within the industrial automation system for example on a higher level control system such as task scheduler or broker.

The robot 11 executes the tasks as defined in the task tree program 25, which is generated from the behavior tree structure, until it arrives at the delegating task. Several autonomous machines within an industrial automation system which are candidates for delegating tasks or taking over delegate tasks have for example access to a shared memory. With this shared memory and the definition of delegate tasks, an exchange platform is realized which can be used during runtime of the autonomous machines to facilitate the decentralized planning and execution of automation tasks.

According to the first embodiment, the gripper 11 and the AGV 10 are communicatively linked via an industrial communication network, which is installed in the industrial automation system and connects all the machines within the system. The automation task "move part to robot" 200 has been delegated from the gripper 11 to the AGV 10. The corresponding task tree program 20 is also based on a behavior tree structure. It has the structure of a sequence composition 201, which comprises the following tasks: "parts left at storage?" 202, "move to storage" 203, "load part" 204, "move to robot" 205. For executing, the AGV 10 first simulates the automation task "move part to robot" 200. This simulation is triggered due to a simulation requirement which has been assigned to the "Move part to robot" task 200.

The simulation is performed on the AGV itself, in particular on the same PLC which is also responsible for executing the task tree program 20. In alternative embodiments, an external CPU, e.g. as part of a felt manager, might be better suited to perform the simulation, for example to track the AGV's route to the factory or shop floor. The AGV can get the necessary information for its own program via a blackboard.

In case, that there is no feasible path for the movement tasks of the AGV, the simulation would signal failure right away without wasting time and battery of the AGV 10. In case the simulation delivers as a result that the AGV can move the part from the storage to the robot as intended, the execution of the "move part to robot" task 200 can be executed in reality without further delay, in order to fulfill the overall automation task of the robot 11 and the AGV 10 working collaboratively together.

According to the second embodiment, a machine within an industrial automation system, for example a robot, has to place a part to be processed by an assembly line to a conveyor corresponding to the assembly line and can thereby choose between different assembly lines with corresponding conveyors. For example, five individual production lines L1, L2, L3, L4, L5 providing differing sets of production skills are installed and can be chosen by the robot. According to the second embodiment, the producibility of a new product variant has already been checked and its production has already begun. Parts arrive at the robot in an irregular manner. The robot in this embodiment has to decide autonomously which assembly line to choose to fulfill a given optimization criteria, e.g. the criteria to optimize the production time.

The robot first triggers a simulation of each of the five production lines L1, L2, L3, L4, L5. This simulation is for example executed on a computing platform of the automation system, which is specialized for executing the simulation of all steps which can be simulated in the automation system on demand. The result is transferred back to the robot. All the simulations are preferably executed in parallel, as far as computing power allows. This ensures on the one hand that a result is delivered to the robot as fast as possible and on the other hand that the result is based on the actual conditions in the automation system, like actual occupancy of the related machines or constraints like ongoing maintenance measures or similar.

By way of example, the assembly lines L1-L5 lead to the following simulated result of a predicted production time:

| Assembly line | Simulation result |
|---|---|
| L1 | Fail due to missing skill |
| L2 | Success, 120min |
| L3 | Success, 130min |
| L4 | Success, 60min |
| L5 | Success, 90min |

Based on this simulation result, the robot would choose L4 as the assembly line with a predicted success and the shortest production time. This choice is made irrespectively of an order of the assembly line within a fallback sequence of the behavior tree.

As this simulation and the selection of one of the lines is performed permanently or at least with every new part arriving at the robot, the simulation is also triggered permanently to reflect the actual capacities in the manufacturing plant as good as possible. By way of example, in a next simulation triggered by the robot, the workload of the line L4 has changed due to the selection of this line by the robot in the sequence before or for the part that arrived before. This causes for example an extension of the production time of line L4. Assuming that nothing else has changed in the manufacturing conditions, assembly line L4 would now deliver "Success, 300min" as simulation result. Consequently, assembly line L5 would be chosen next. The simulation also incorporates the current state like e.g. the workload of the respective resources and therefore enables a situation-dependent ordering.

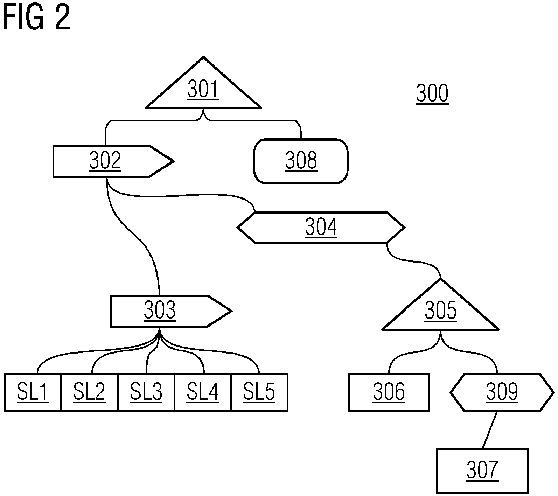

Figure 2 shows a corresponding behavior tree structure with the definition of an extended fallback creating an order based on simulation results. The automation task to be fulfilled by the robot is the task "select assembly line" 300.
The fallback composition 301 comprises a sequence composition 302 which has to be executed first. This sequence composition 302 comprises a parallel sequence 303, which defines an evaluation task for evaluating a set of assembly lines by simulating each assembly line L1, L2, L3, L4, L5 of the set of assembly lines in parallel. In other words, the parallel sequence 303 triggers the tasks "simulating L1" SL1, "simulating L2" SL2, "simulating L3" SL3, "simulating L4" SL4, "simulating L5" SL5 in parallel or at the same time and the parallel sequence task 303 delivers a success when all lines have been simulated and evaluated. The step of evaluating includes delivering the simulation result in a way that allows a further processing within the task tree program, e.g. in the format of a table with parameters which can directly influence the order of execution, e.g. the parameter of a simulated production time.

As a next step, the sequence composition 302 comprises a fallback composition 305 which comprises the task "move part to best line in set" 306. For executing this task, the robot can extract the best line from the simulation result as described above. For example, it selects the assembly line which has been evaluated with the shortest production time. If the task "move part to best line in set" 306 is executed successfully the overall fallback composition 305 will result in a success. Otherwise, if the task "move part to best line in set" 306 can't be executed by the robot, the task "remove best line from set" 307 is executed within the fallback composition 305. The decorator "always fail" 309 ensures that a failure will be returned by 305. In case of failure, the implemented decorator 304 causes the robot to retry as often as possible, i.e. as often as the number of assembly lines which have been evaluated as success.

In case that the robot cannot move the part to any one of the assembly lines the sequence composition 302 results in a failure state and instead, the fallback composition 301 causes the execution of a "producibility failure" task 308, which might preferably be the output of an alarm message or alarm signal.

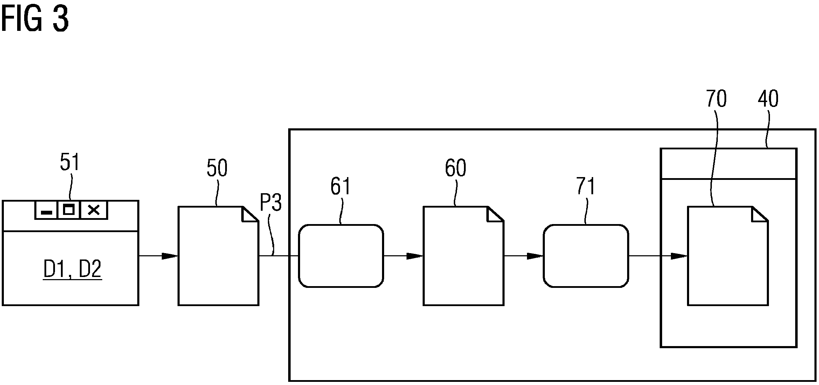

Behavior trees like the one described in the embodiments above are defined for example graphically according to a third embodiment of the invention. Figure 3 illustrates the generation and usage of a task tree program. For example, a graphic development environment 51 is used to generate a behavior tree underlying a task tree program. The graphical development environment 51 assists the user in building a behavior tree that reflects the needs of the intended application, e.g. of a collaborative automation task performed by several machines in a manufacturing plant.

For example, the user can build the desired behavior tree by using behavior tree modules. Drag and drop techniques might be provided by the graphic development environment 51. Moreover, the graphic development environment 51 generates the task tree program as target platform specific code 50. With this, the step of defining D1 a task tree program based on a behavior tree structure is preferably implemented.

Moreover, the step of defining D2 a simulation requirement for at least one task or a composition of tasks is enabled by graphically assigning a simulation requirement to a selected task. This can happen by entering simulation code or dropping a reference to a separate simulation system or referencing a pre-compiled co-simulation module. Preferably, modularized elements can be used to mark selected tasks as tasks to be simulated right before their execution.

The behavior tree can afterwards be transpiled with the help of a transpiler 61 into an IEC 61131 language code 60 and subsequently be compiled with a compiler 71 to a PLC machine code 70 and delivered to a PLC 40 in this format, so that the PLC 40 performs the task tree program. In this way, the task tree program is provided in a step P3 to the PLC 40.

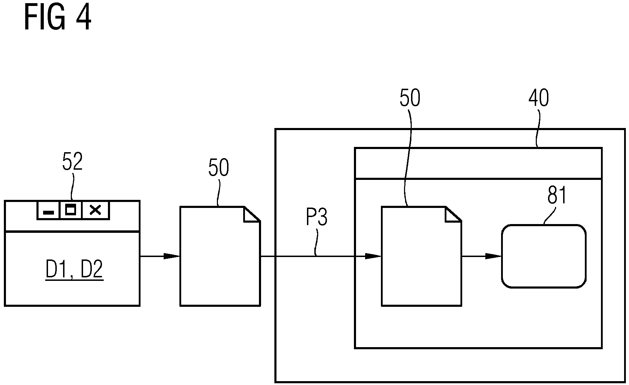

According to a fourth embodiment of the invention, which is illustrated by figure 4, a text-based editor 52 is used to generate the task tree program in a target platform specific code 50 and to define D1 a task tree program based on a behavior tree structure and moreover to define D2 a simulation requirement. The target platform specific code 50 is then transferred to the PLC 40 directly thereby providing P3 the task tree program to the PLC 40 and can be executed on the PLC 40 via an interpreter 81 running on the same PLC 40.

Although the present invention has been described in accordance with preferred embodiments, it is obvious for the person skilled in the art that modifications are possible in all embodiments.

Via simulation and simulation-based evaluation of specific tasks within task tree programs, a complex or expensive or time-consuming trial and error approach for automation tasks performed by autonomous machines is avoided. In addition, the delegation of tasks between machines in an industrial automation system enables an easy scaling to multi-machine systems, so that the use of fully autonomous machines building the machine equipment of whole factories or plants is further facilitated.

## Claims

1. Computerimplemented method for programming at least one machine (10) in an industrial automation system (100), the industrial automation system (100) comprising the at least one machine (10) and at least one additional machine (11), the method comprising the steps of:
- defining (D1) a task tree program (20, 25) for the at least one machine (10) based on a behavior tree structure, wherein the behavior tree structure is composed of at least one composition (201, 251) of tasks (202, 203, 253, 255), wherein the at least one composition (201) is a sequence composition of tasks or a fallback composition of tasks,
- defining (D2) a simulation requirement for at least one of the tasks (202, 203) or the composition (201) of tasks,
- providing (P3) the task tree program (20) to a PLC (40) for execution of the task tree program (20) by the PLC (40), whereby the simulation requirement triggers a simulation of the at least one of the tasks (202, 203) or the composition (201) of tasks by a computerimplemented simulation program during execution of the task tree program (20, 25).

2. Computerimplemented method according to claim 1, wherein the at least one of the tasks or the composition (201, 251) of tasks comprises a decorator (256) for including constraints to the at least one of the tasks or the composition (201, 251).

3. Computerimplemented method according to claim 1 or 2, wherein the at least one of the tasks (202, 203) or the composition (201) of tasks comprise one or more subtasks, wherein the subtasks are a sequence composition of subtasks or a fallback composition of subtasks.

4. Computerimplemented method according to one of the preceding claims, wherein the at least one of the tasks (202, 203) or the composition (201) of tasks build subtasks to a superordinate task.

5. Computerimplemented method according to one of the preceding claims, wherein at least one of the tasks is a delegate task (260), defining another machine of the additional machines of the industrial automation system as responsible for executing a predefined task.

6. Computerimplemented method according to one of the preceding claims, wherein a sequence of execution of tasks in the PLC within a composition of tasks is changed dependent on the output of the simulation.

7. Computerimplemented method according to one of the preceding claims, wherein the task tree program is provided to the PLC for execution of an automation task.

8. Computerimplemented method according to one of the preceding claims, wherein the task tree program is defined graphically or in a domain specific language.

9. Computerimplemented method according to one of the preceding claims, wherein the task tree program is defined based on reusable behavior tree modules.

10. Computer program product comprising instructions which, when executed by a computer, cause the computer to carry out the method according to one of the preceding claims.

11. Display editor configured to perform a method for programming at least one machine in an industrial automation system according to one of the preceding claims.

12. Display editor according to claim 11, wherein the PLC further comprises a transpiler and a compiler for generating machine code from the task tree program to be executed by the PLC or an interpreter for execution of the task tree program.
